Europäisches Patentamt

European Patent Office

Office européen des brevets

(19)

(11) Veröffentlichungsnummer: **0 338 184 B1**

## (12) EUROPÄISCHE PATENTSCHRIFT

(45) Veröffentlichungstag der Patentschrift:
13.11.91 Patentblatt 91/46

(51) Int. Cl.⁵: **B65G 59/04**

(21) Anmeldenummer: **89100056.4**

(22) Anmeldetag: **04.01.89**

(54) **Entpalettieranlage.**

(30) Priorität: **16.04.88 DE 3812801**

(43) Veröffentlichungstag der Anmeldung:
**25.10.89 Patentblatt 89/43**

(45) Bekanntmachung des Hinweises auf die
Patenterteilung:
**13.11.91 Patentblatt 91/46**

(84) Benannte Vertragsstaaten:
**AT BE CH DE ES FR GB IT LI NL SE**

(56) Entgegenhaltungen:
**US-A- 4 358 236**

(73) Patentinhaber: **MEYPACK Verpackungs- und
Palettiertechnik GmbH
Industriestrasse 1
W-4405 Nottuln 2 (DE)**

(72) Erfinder: **Pekruhl, Klaus, Ing. grad.
Wibbeltweg 10
W-4419 Laer (DE)**

(74) Vertreter: **Habbel, Hans-Georg, Dipl.-Ing.
Postfach 3429 Am Kanonengraben 11
W-4400 Münster (DE)**

## Beschreibung

Die Erfindung bezieht sich auf eine Entpalettieranlage für Dosen mit einer Hubeinrichtung für die Paletten und einem darüber angeordneten Gurtförderer, bei dem das Untertrum des Fördergurtes dicht an einer Magnetplatte anliegt und mit einer zweiten Fördereinrichtung, auf welche die Dosen von dem Fördergurt übergeben werden und mit Gleitkufen, die sich oberhalb der zweiten Fördereinrichtung zwischen den Dosen erstrecken und in deren Förderrichtung aufwärts verlaufen.

Einrichtungen dieser Art sind beispielsweise aus der DE-PS 2222678 bekannt und haben sich in der Praxis allgemein bewährt. Beim Ablegen der Stützplatten, welche die einzelnen Dosenlagen auf der Palette trennen, kann es jedoch dann zu Störungen im Arbeitsablauf kommen, wenn die Stützplatte eingerissen ist und sich an der Trennvorrichtung verfängt, welche die Stützplatte vom Untertrum auf das Obertrum des Fördergurtes umlenken soll Weiterhin können derartig beschädigte Stützplatten zu Schwierigkeiten führen, wenn sie vom Obertrum des Fördergurtes in den Ablageschacht für die Stützplatten fallen und aufgrund ihrer unregelmäßigen Formgebung nicht ordnungsgemäß abgelegt werden.

Insbesondere bei der ersten abzulegenden Stützplatte, welche über die gesamte Höhe des Ablageschachtes absinkt, kann es zu zerknitterten, schrägstehenden oder anderweitig unsachgemäß abgelegten Stützplatten kommen, wodurch der schnelle und reibungslose Arbeitsablauf gestört wird.

Weiterhin können Störungen im Arbeitsablauf auftreten, wenn das Untertrum des Fördergurtes nicht straff genug an der Magnetplatte anliegt und daher die Dosen am Fördergurt falsch ausgerichtet sein können oder von diesem abfallen können.

Die aufgeführten Störungen im Arbeitsablauf vermindern bei an sich hoher Arbeitsgeschwindigkeit der Anlage deren Arbeitsleistung und erfordern darüber hinaus einen Bedienungsaufwand, um die Anlage überwachen und Störungen schnellstmöglich beseitigen zu können.

Der Erfindung liegt die Aufgabe zugrunde, bei einer gattungsgemäßen Entpalettieranlage die Arbeitsleistung zu erhöhen und den Bedienungsaufwand zu verringern.

Diese Aufgabe wird gemäß den Merkmalen im kennzeichnenden Teil des Hauptanspruches gelöst. Weitere vorteilhafte Ausgestaltungen der Erfindung sind in den Unteransprüchen beschrieben.

Durch den erfindungsgemäßen Vorschlag werden Störungen im Betriebsablauf einer Entpalettieranlage, die an sich schon eine hohe Arbeitsgeschwindigkeit aufweist, weitgehend ausgeschaltet, so daß auf diese Weise die Arbeitsleistung der gesamten Anlage gesteigert werden kann. Gleichzeitig wird die notwendige Aufmerksamkeit für die Anlage verringert, so daß entsprechend weniger Bedienungsaufwand erforderlich wird.

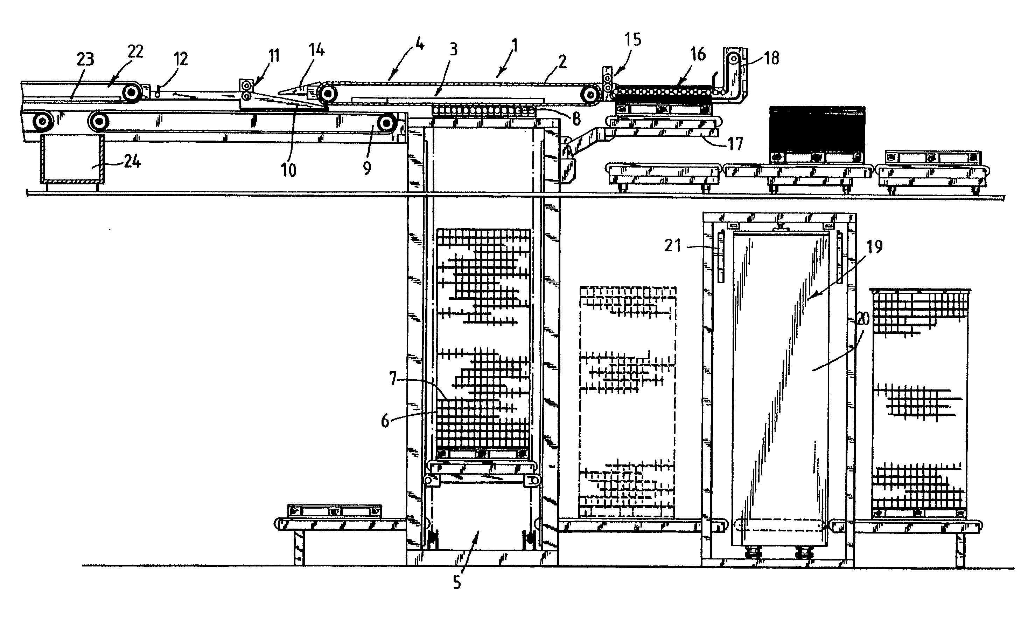

Die Zeichnung stellt eine schematische Seitenansicht eines Ausführungsbeispiels einer erfindungsgemäßen Entpalettieranlage dar.

In der Zeichnung ist mit 1 ein Gurtförderer bezeichnet, der einen Fördergurt 2 umfaßt, welcher um eine Magnetplatte 3 umläuft und mit seinem Untertrum dicht an der Unterseite der Magnetplatte 3 anliegt. Der Fördergurt 2 ist aus einzelnen Schuppengliedern 4 aufgebaut, wobei einige der Verbindungselemente zwischen den Schuppengliedern 4 aus einem ferromagnetischem Werkstoff, beispielsweise Stahl, bestehen, so daß auf diese Weise das Untertrum des Fördergurtes 2 unabhängig von der Einstellung vorhandener mechanischer Gurtspanner straff an der Unterseite der Magnetplatte 3 anliegt.

Unterhalb der Magnetplatte 3 ist eine Hubeinrichtung 5 für eine Palette angeordnet, wobei die Palette mehrere Lagen von Dosen 6 aufweist. Zwischen den einzelnen Dosenlagen befinden sich Stützplatten 7, die zu einem sicheren Halt des gesamten Dosenstapels auf der Palette beitragen und beispielsweise aus Pappe bestehen.

Die Hubeinrichtung 5 hebt die Palette mit dem Dosenstapel und der jeweils oben aufliegenden Stützplatte 7 an, bis eine Lichtleiste 8 durch die obersten Dosen 6 verdeckt wird, welche unterhalb des Untertrums des Fördergurtes 2 angeordnet ist. Der Lichtleiste 8 sind optische Sensoren zugeordnet, auf die normalerweise das Licht der Lichtleiste 8 fällt. Bei einer Unterbrechung des Lichtstrahls beenden die optischen Sensoren mittels einer geeigneten Schaltung die weitere Aufwärtsbewegung der Hubeinrichtung 5.

Der Abstand der Lichtleiste 8 und der zugeordneten optischen Sensoren von der Magnetplatte 3 ist so gewählt, daß die Magnetkraft der Magnetplatte 3 in diesem Abstand sicher ausreicht, um die oberste Lage der Dosen 6 an das Untertrum des Fördergurtes 2 anzuziehen. Der Abstand von der Lichtschranke zu der Magnetplatte 3 ist dabei kleiner als die Höhe der Dosen 6, so daß auch in ihrer angehobenen Stellung die Dosen 6 die Lichtstrahlen weiterhin unterbrechen und keine weitere Hubbewegung der Hubeinrichtung 5 zulassen.

Das Untertrum des Fördergurtes 2 bewegt sich in der Zeichnung nach links, und auf diese Weise werden die von dem Gurtförderer 1 erfaßten Dosen 6 sowie die zwischen den Dosen 6 und dem Untertrum festgehaltene Stützplatte 7 nach links auf eine zweite Fördereinrichtung 9 befördert. Die Magnetwirkung der Magnetplatte 3 wird an ihrem linken Ende schwächer, so daß die Dosen 6 auf die zweite Fördereinrichtung 9 abgelegt werden. Sie tragen dabei immer noch an ihrer Oberseite die zugeordnete Stützplatte 7.

Wenn der Raum unterhalb der Magnetplatte 3 von Dosen 6 frei ist, kann wieder eine optische Verbindung von der Lichtleiste 8 zu den zugeordneten Sensoren hergestellt werden und der nächste Hub der Hubeinrichtung 5 erfolgen. Lediglich wenn z.B. eine querhängende Dose 6 in Eigenrotation ortsfest unter der Magnetplatte 3 rollen sollte, während sich der Fördergurt 2 weiterbewegt, wird die Lichtschranke einen weiteren Hub der Hubeinrichtung 5 solange verhindern, bis die querhängende verbleibende Dose 6 durch Bedienpersonal von dem Fördergurt 2 entfernt worden ist.

Die Dosen 6 werden auf der zweiten Fördereinrichtung 9 mit der obenliegenden Stützplatte 7 weiterhin nach links befördert, wobei Gleitkufen 10 sich zwischen die Dosen 6 erstrecken und keilförmig ausgebildet sind, so daß die auf den Dosen liegende Stützplatte 7 allmählich angehoben wird. Am Ende der Gleitkufen 10 gelangt die Stützplatte 7 zwischen ein Paar von Rollen 11, welche die Stützplatte 7 zwischen sich erfassen und weiter nach links transportieren, bis die Stützplatte 7 an einen Endschalter 12 anstößt. Der Endschalter kann auch berührungslos, z.B. mittels einer Lichtschranke, ausgelöst werden.

Auf einen Impuls dieses Endschalters 12 hin kehren die Rollen 11 ihre Laufrichtung um und bewegen die Stützplatte 7 nach rechts. Dabei gelangt die Stützplatte 7 auf zweite Gleitkufen 14, die bis auf die Höhe des Obertrums des Fördergurtes 2 ansteigen, so daß die Stützplatte 7 auf dieses Obertrum geführt wird und anschließend mit dem Fördergurt 2, dessen Obertrum sich nach rechts bewegt, weiter gefördert wird.

Die Richtungsumkehr der Stützplatte 7 erfolgt nicht durch Führungsbleche od. dgl., so daß eine eingerissene Stützplatte 7 sich nicht in derartigen Führungsblechen verfangen und zu Störungen im Betriebsablauf führen kann. Die vorgesehenen Rollen 11 erfassen auch eingerissene oder verknickte Stützplatten 7 sicher und bewirken so einen störungsfreien Arbeitsablauf.

Hinter dem Ende des Obertrums wird die Stützplatte 7 von einem Paar von zweiten Rollen 15 erfaßt und mit im wesentlichen gleichbleibender Geschwindigkeit weiterbefördert. Die Stützplatte 7 gelangt dadurch auf einen Rollenteppich 16, unter welchem sich ein absenkbarer Träger 17 für Paletten befindet. Mehrere Stützplatten 7 werden auf dem Rollenteppich 16 gesammelt und anschließend auf eine Palette abgesenkt, die sich auf dem Träger 17 befindet. Zu diesem Zweck wird der Rollenteppich 16 in ein Gehäuse 18 verfahren, so daß ein Freiraum entsteht, durch welchen die Stützplatten 7 auf die Palette absinken können.

Der Rollenteppich 16 dient als Zwischenlager zum Sammeln einiger Stützplatten 7, wobei in der Zeit des Sammelns der Träger 17 mit der zugehörigen Palette und ggf. mit schon auf dieser befindlichen Stützplatten 7 abgesenkt wird. Ebenso kann während des Ansammelns von Stützplatten 7 auf dem Rollenteppich 16 eine volle Palette gegen eine leere Palette ausgetauscht werden, so daß der Abtransport der Stützplatten 7 ohne Unterbrechung des allgemeinen Arbeitsablaufes erfolgen kann.

Die Fallhöhen der Stützplatten 7 zum einen vom Fördergurt 2 auf den Rollenteppich 16 und zum zweiten vom Rollenteppich 16 auf die Palette sind jeweils sehr niedrig, so daß auch eingerissene, verknickte oder sonst unregelmäßig geformte Stützplatten 7 sich nicht verkanten oder schräg stellen können und auf diese Weise den Betriebsablauf stören können.

Die geringe Fallhöhe der Stützplatten 7 wird unter anderen auch dadurch erreicht, daß der Träger 17 zunächst in einer angehobenen Stellung die ersten Stützplatten 7 aufnimmt und anschließend abgesenkt wird. So weist auch die erste neue Stützplatte, die auf eine Palette abgelegt wird, keine große Fallhöhe auf, wie dies beispielsweise beim Ablegen einer solchen Stützplatte in einen leeren Aufnahmeschacht der Fall wäre.

Ein reibungsfreier Arbeitsablauf der dargestellten Entpalettieranlage wird weiterhin auch dadurch erreicht, daß eine mit Dosen 6 angefüllte Palette zunächst in einer Zentrierstation 19 aufgenommen und zentriert wird, wobei gleichzeitig in dieser Zentrierstation 19 ein Abdeckrahmen abgenommen wird, der sich auf der obersten Lage von Dosen 6 einer Palette befindet. Die Zentrierstation 19 weist zwei seitliche Zentrierplatten 20 und zwei stirnseitige Zentrierplatten 21 auf.

Eine volle Palette wird in der Zeichnung von rechts kommend unter der ersten stirnseitigen Zentrierplatte 21 in die Zentrierstation 19 gefahren und anschließend angehoben. Dabei wird sie an ihren beiden gesamten Seitenflächen von den seitlichen Zentrierplatten 20 erfaßt, wenn diese sich aufeinander zu bewegen und lediglich in ihrem oberen Bereich von den beiden stirnseitigen Zentrierplatten 21. Der Abdeckrahmen wird auf diese Weise in eine vorgegebene Stellung verbracht, von entsprechenden Halteorganen der Zentrierstation 19 erfaßt und von dem Dosenstapel abgehoben.

Die volle Palette wird anschließend der Hubeinrichtung 5 zugeführt und — wie oben beschrieben — geleert. Sobald die Palette 5 in der Hubeinrichtung genügend hoch angehoben worden ist, fährt eine vorbenutzte, mittlerweile leere Palette aus einer Wartestellung unter der Hubeinrichtung 5 her in die Zentrierstation 19. Dort nimmt sie den Abdeckrahmen auf, der sich noch an den Halteorganen befindet. Anschließend wird diese leere Palette mit dem Abdeckrahmen zur Weiterverwendung bewegt, während eine neue volle Palette in die Zentrierstation 19 einläuft. Die in der Hubeinrichtung 5 geleerte Palette wird, wenn sie abgearbeitet worden ist, in die Warteposition verfahren und die neue volle Palette wird in die Hubeinrichtung 5 verbracht. Anschließend kann der beschriebene Kreislauf erneut durchlaufen werden.

Die Dosen 6, welche sich auf der zweiten Fördereinrichtung 9 befinden, gelangen in den Bereich einer dritten Fördereinrichtung 22, die ähnlich dem Gurtförderer 1 über der zweiten Fördereinrichtung 9 angeordnet ist und eine Magnetplatte 23 umfaßt. Die Magnetplatte 23 ist jedoch von wesentlich schwächerer Wirkung als die Magnetplatte 3. Aus diesem Grund ist die dritte Fördereinrichtung 22 höhenverstellbar ausgelegt und so knapp über der Höhe der aufrechtstehenden Dosen 6 auf der zweiten Fördereinrichtung 9 angeordnet, daß sie diese auf rechtstehenden Dosen 6 sicher erfaßt.

Die zweite Fördereinrichtung 9 endet dort, wo die Dosen 6 von der dritten Fördereinrichtung 22 erfaßt werden, so daß flachliegende Dosen, die aufgrund ihres Abstandes zu der dritten Fördereinrichtung 22 nicht von der Wirkung der Magnetplatte 23 erfaßt werden, in einen Auffangbehälter 24 fallen. Hinter dem Auffangbehälter 24 übergibt die dritte Fördereinrichtung 22 die Dosen 6 auf ein letztes Förderband, auf welchem die Dosen 6 vereinzelt und z.B. zu einer Befüllvorrichtung geführt werden. Auf diese Weise ist gewährleistet, daß nur korrekt ausgerichtete Dosen der Weiterverarbeitung zugeführt werden.

Störungen im Betriebsablauf sind bei der erfindungsgemäßen Entpalettieranlage, die an sich schon eine hohe Arbeitsgeschwindigkeit aufweist, weitgehend ausgeschaltet, so daß auf diese Weise die Arbeitsleistung der gesamten Anlage gesteigert werden kann. Gleichzeitig wird die notwendige Aufmerksamkeit für die Anlage verringert, so daß entsprechend weniger Bedienungsaufwand erforderlich wird. Insbesondere im Bereich des Gurtförderers 1 sind drei wesentliche Störquellen verringert oder eliminiert worden :

Durch magnetische Einlagen in dem Fördergurt 2 ist ein straffes Anliegen des Untertrums an der Magnetplatte 3 auch dann gewährleistet, wenn mechanische Einstellmöglichkeiten zur Gurtspannung nicht ausreichen oder fehlerhaft bedient werden. Auf diese Weise liegen die Dosen 6 korrekt so nah wie möglich an der Magnetplatte 3 an und können sicher der zweiten Fördereinrichtung 9 übergeben werden. Weiterhin gewährleistet in diesem Bereich die Lichtleiste 8 mit möglichst vielen Lichtquellen und entsprechend möglichst vielen zugeordneten optischen Sensoren, daß ein Hub der Hubeinrichtung 5 auch dann unterbleibt, wenn lediglich eine einzelne Dose 6 unterhalb des Untertrums verbleibt, so daß weder diese Dose 6 noch die Ordnung der auf der Palette verbleibenden restlichen Dosenlagen durch einen derartigen Hub zerstört werden kann.

Zweitens ist das Umlenken der Stützplatten vom Unter- zum Obertrum sowie drittens das Ablegen der Stützplatten auf Paletten sicherer und unempfindlicher gegenüber beschädigten Stützplatten.

## Patentansprüche

1. Entpalettieranlage für Dosen (6) mit einer Hubeinrichtung (5) für die Paletten und einem darüber angeordneten Gurtförderer (1), bei dem das Untertrum des Fördergurtes (2) dicht an einer Magnetplatte (3) anliegt, mit einer zweiten Fördereinrichtung (9), auf welche die Dosen (6) von dem Fördergurt (2) übergeben werden und mit Gleitkufen (10), die sich oberhalb der zweiten Fördereinrichtung (9) zwischen den Dosen (6) erstrecken und in deren Förderrichtung aufwärts verlaufen, gekennzeichnet durch

a)      in dem Fördergurt (2) angeordnete ferromagnetische Gurtelemente,

b)      optische Sensoren, die unterhalb des Untertrums des Fördergurtes (2) und quer zu dessen Förderrichtung angeordnet sind,

c)      eine keilförmige Ausbildung der Gleitkufen (10), die sich aus einer Höhe über der zweiten Fördereinrichtung (9), die kleiner ist als die Dosenhöhe bis zu einer Höhe die größer ist als die Dosenhöhe erstrecken,

d)      wenigstens ein in wechselnden Richtungen antreibbares Paar übereinander angeordneter Rollen (11) am Ende der Gleitkufen (10),

e)      einen Endschalter (12), der im wesentlichen auf der Höhe der Rollen (11) und — in Förderrichtung der Dosen (6) — im Abstand hinter den Rollen (11) angeordnet ist,

f)      zweite Gleitkufen (14), die in geringem Abstand hinter dem Fördergurt (2) angeordnet sind und entgegen der Förderrichtung der Dosen (6) im wesentlichen auf die Höhe des Obertrums des Fördergurtes (2) ansteigen,

g)      wenigstens ein zweites Paar übereinander angeordneter Rollen (15), das im wesentlichen auf Höhe des Obertrums des Fördergurtes (2) und — in dessen Förderrichtung — in geringem Abstand hinter dessen Ende angeordnet ist,

h)      einen an das zweite Paar von Rollen (15) anschließenden Rollenteppich (16), der in relativ geringem Abstand unterhalb der Rollen (15) angeordnet und verfahrbar ausgebildet ist,

i)      einen unterhalb des Rollenteppichs (16) angeordneten und absenkbaren Träger (17) für Paletten.

2. Entpalettieranlage nach Anspruch 1, dadurch gekennzeichnet, daß die optischen Sensoren unterhalb des Fördergurtes (2) über den gesamten Bereich verteilt angeordnet sind, in welchem die Dosen (6) von einer Palette dem Fördergurt (2) zugeführt werden.

3. Entpalettieranlage nach Anspruch 1 oder 2, dadurch gekennzeichnet, daß der Fördergurt (2) aus miteinander verbundenen einzelnen Schuppengliedern (4) aufgebaut ist, wobei zumindest ein Teil der Verbindungselemente dieser Schuppenglieder (4) aus ferromagnetischem Werkstoff besteht.

4. Entpalettieranlage nach einem oder mehreren der Ansprüche 1 bis 3, dadurch gekennzeichnet, daß der Fördergurt (2) mit den zugeordneten optischen Sensoren höhenverstellbar ausgebildet ist.

5. Entpalettieranlage nach einem oder mehreren der vorhergehenden Ansprüche, gekennzeichnet durch eine der Hubeinrichtung (5) für die Paletten vorgeschaltete Zentrierstation (19), welche zumindest im oberen Bereich der vollgestapelten Palette und des Abdeckrahmens vier sternförmig aufeinanderzu bewegliche senkrechtstehende Zentrierplatten (20, 21) aufweist.

6. Entpalettieranlage nach einem oder mehreren der vorhergehenden Ansprüche, gekennzeichnet durch eine dritte Fördereinrichtung (22), die höhenverstellbar und über dem hinteren Bereich der zweiten Fördereinrichtung (9) angeordnet ist, wobei diese dritte Fördereinrichtung (22) einen Fördergurt und eine relativ schwache Magnetplatte (23) umfaßt und im Abstand über der zweiten Fördereinrichtung (9) angeordnet ist, der der Höhe einer Dose (6) entspricht oder nur geringfügig größer ist.

## Claims

1. A depalletizing installation for cans (6) comprising a lifting device (5) for the pallets and a belt conveyor (1) arranged thereover, wherein the bottom strand of the conveyor belt (2) lies tight against a magnetic plate (3), a second conveyor device (9), onto which the cans (6) are transferred from the conveyor belt (2) and runners (10), which extend above the second conveyor device (9) between the cans (6) and run upwards in the conveying direction thereof, characterized by

a) ferro-magnetic belt elements arranged in the conveyor belt (2),

b) optical sensors, which are arranged below the bottom strand of the conveyor belt (2) and perpendicular to the conveying direction thereof,

c) a wedge-shaped construction of the runners (10), which extend from a height above the second conveying device (9) which is smaller than the can height as far as a height which is greater than the can height,

d) at least one pair, drivable in alternating directions, of rollers (11) arranged above each other at the end of the runners (10),

e) an end switch (12), which is arranged at substantially the height of the rollers (11) and in the conveying direction of the cans (6) — at a distance behind the rollers (11),

f) second runners (14), which are arranged at a small distance behind the conveyor belt (2) and rise against the conveying direction of the cans (6) substantially to the height of the top strand of the conveyor belt (2),

g) at least one second pair of rollers (15) arranged above each other, which pair is arranged substantially at the height of the tap strand of the conveyor belt (2) and — in the conveying direction thereof — at a slight distance behind the end thereof,

h) a roller carpet (16) adjoining the second pair of rollers (15), which carpet (16) is arranged at a relatively slight distance below the rollers (15) and constructed to be movable,

i) a lowerable pallet carrier (17) arranged below the roller carpet (16).

2. A depalletizing installation according to claim 1, characterized in that the optical sensors are arranged below the conveyor belt (2) distributed aver the whole area in which the cans (6) are delivered from a pallet to the conveyor belt (2).

3. A depalletizing installation according to claim 1 or claim 2, characterized In that the conveyor belt (2) is constructed of interconnected individual slat members (4), at least some of the connecting members of these slat members (4) consisting of ferromagnetic material.

4. A depalletizing installation according to one or more of claims 1 to 3, characterized in that the conveyor belt (2) with the associated optical sensors is constructed to be height-adjustable.

5. A depalletizing installation according to one or more of the preceding claims, characterized by a centring station (19) connected upstream of the lifting device (5) for the pallets, which centring station (19) comprises, at least in the upper area of the fullystacked pallet and the cover frame, four vertical centring plates (20, 21) movable radially towards each other.

6. A depalletizing installation according to one or more of the preceding claims, characterized by a third conveying device (22), which is height-adjustable and arranged above the rear area of the second conveyor device (9), this third conveyor device (22) comprising a conveyor belt and a relatively weak magnetic plate (23) and being arranged at a distance above the second conveyor device (9), which distance corresponds to the height of a can (6) or is only slightly greater.

## Revendications

1. Installation de dépalettisation pour boîtes (6), comprenant un dispositif élévateur (5) pour les palettes et un transporteur à courroie (1) disposé au-dessus, dans lequel le brin inférieur de la courroie transporteuse (2) est étroitement appliqué contre une plaque magnétique (3), et un deuxième dispositif transporteur (9), sur lequel les boîtes (6) sont transférées en provenance de la courroie transporteuse (2) et des glissières (10) qui s'étendent au-dessus du deuxième dispositif transporteur (9), entre les boîtes (6), et sont en pente montante dans le sens du transport des boîtes, caractérisée par :

a)      des éléments de courroie ferromagnétique agencés dans la courroie transporteuse (2) ;

b)      des capteurs optiques qui sont disposés au-dessous du brin inférieur de la courroie transporteuse (2) et transversalement à la direction de transport de cette courroie ;

c)      une conformation en coin des glissières (10) qui partent d'un point situé à une hauteur au-dessus du deuxième dispositif transporteur (9) qui est inférieure à la hauteur des boîtes, jusqu'à un point situé à une hauteur qui est plus grande que la hauteur des boîtes ;

d)      au moins une paire de rouleaux (11) disposés, l'un au-dessus de l'autre à l'extrémité des glissières (10) et qui peut être entraînée dans les deux sens ;

e)      un interrupteur de fin de course (12) qui est disposé sensiblement à la hauteur des rouleaux (11), et à une certaine distance en aval des rouleaux (11) dans le sens du transport des boîtes (6) ;

f)      des deuxièmes glissières (14) qui sont disposées à petite distance en aval de la courroie transporteuse (2) et s'élèvent en sens inverse du sens du transport des boîtes (6), sensiblement jusqu'à la hauteur du brin supérieur de la courroie transporteuse (2) ;

g)      au moins une deuxième paire de rouleaux (15) disposés l'un au-dessus de l'autre, qui est disposée sensiblement à la hauteur du brin supérieur de la courroie transporteuse (2) et à petite distance en aval de l'extrémité de ce brin, dans le sens du transport de ce brin,

h)      un tapis de rouleaux (16) qui fait suite à la deuxième paire de rouleaux (15), qui est disposé à une distance relativement petite au-dessous des rouleaux (15) et est de construction mobile,

i)      un support (17) destiné à supporter des palettes, disposé au-dessous du tapis de rouleaux (16) et qui peut être abaissé.

2. Installation de dépalettisation selon la revendication 1, caractérisée en ce que les capteurs optiques sont disposés au-dessous de la courroie transporteuse (2), répartis sur toute la surface dans laquelle les boîtes (6) sont transférées d'une palette à la courroie transporteuse (2).

3. Installation de dépalettisation selon la revendication 1 ou 2, caractérisée en ce que la courroie transporteuse (2) est composée de plusieurs éléments (4) formant des écailles, reliés les uns aux autres, au moins une partie des éléments d'assemblage de ces éléments en écaille (4) étant composée d'une matière ferromagnétique.

4. Installation de dépalettisation selon une ou plusieurs des revendications 1 à 3, caractérisée en ce que la courroie transporteuse (2) est agencée pour être réglable en hauteur avec les capteurs optiques correspondants.

5. Installation de dépalettisation selon une ou plusieurs des revendications précédentes, caractérisée par un poste de centrage (19) agencé en amont des dispositifs élévateurs (5) pour les palettes, qui présente au moins dans la région supérieure de la palette entièrement empilée et du cadre de recouvrement, quatre plaques de centrage (20, 21) disposées verticalement, et qui peuvent se rapprocher les unes des autres en étoile.

6. Installation de dépalettisation selon une ou plusieurs des revendications précédentes, caractérisée par un troisième dispositif transporteur (22) qui est agencé, réglable en hauteur et disposé au-dessus de la zone arrière du deuxième dispositif transporteur (9), ce troisième dispositif transporteur (22) comprenant une courroie transporteuse et une plaque magnétique (23) relativement faible et étant disposé à une distance au-dessus du deuxième dispositif transporteur (9) qui correspond à la hauteur d'une botte (6) et/ou qui n'est que légèrement plus grande.

EP 0 338 184 B1